# EUROPÄISCHE PATENTSCHRIFT

(11) **EP 3 357 741 B1**
(45) Veröffentlichungstag und Bekanntmachung des Hinweises auf die Patenterteilung: **15.09.2021**
(21) Anmeldenummer: 18154083.2
(22) Anmeldetag: 30.01.2018
(51) Int. Cl.: B60L 53/14, B60L 5/42, B60L 53/30

(54) **VORRICHTUNG ZUM AUFLADEN EINES ELEKTRISCHEN ENERGIESPEICHERS EINES EINEN ELEKTRISCHEN ANTRIEB AUFWEISENDEN FAHRZEUGS**
DEVICE FOR CHARGING AN ELECTRICAL ENERGY STORAGE DEVICE OF A VEHICLE WITH AN ELECTRICAL DRIVE
DISPOSITIF DE CHARGEMENT D'UN ACCUMULATEUR D'ÉNERGIE ÉLECTRIQUE D'UN VÉHICULE COMPORTANT UN ENTRAÎNEMENT ÉLECTRIQUE

(30) Priorität: 02.02.2017 DE 102017000917
(43) Veröffentlichungstag der Anmeldung: 08.08.2018
(73) Patentinhaber: MAN Truck & Bus SE, 80995 München (DE)
(72) Erfinder: Korbinian, Antwerpen, D/85716 Unterschleissheim (DE)
(74) Vertreter: Liebl, Thomas

(56) Entgegenhaltungen:
- EP-A1- 3 115 248
- WO-A2-2011/079215
- DE-A1-102014 226 357
- GB-A- 2 518 129
- US-A1- 2016 023 564

## Beschreibung

Die Erfindung betrifft eine Vorrichtung zum Aufladen eines elektrischen Energiespeichers, insbesondere einer Traktionsbatterie, ein Fahrzeug mit der erfindungsgemäßen Vorrichtung sowie ein Verfahren zum Aufladen eines elektrischen Energiespeichers, insbesondere einer Traktionsbatterie.

Es sind Fahrzeuge, insbesondere Omnibusse, mit einem elektrischen Antrieb bekannt, deren elektrischer Energiespeicher bzw. deren Traktionsbatterie an ortsfesten Ladestationen mit elektrischer Energie aufgeladen werden kann. Derartige Fahrzeuge können beispielsweise über einen rein elektrischen Antrieb oder aber auch über einen Hybridantrieb mit Elektromotor und Verbrennungsmotor verfügen. Das Fahrzeug weist dabei üblicherweise mehrere elektrische Kontakte auf, die zum Aufladen des fahrzeugseitigen Energiespeichers in Anlage bzw. in Kontakt mit elektrischen Gegenkontakten der jeweiligen Ladestation gebracht werden. Konkret weist das Fahrzeug üblicherweise einen, einen ersten Pol, beispielsweise einen Pluspol, bildenden ersten Leistungskontakt, einen, einen zweiten Pol, beispielsweise einen Minuspol, bildenden zweiten Leistungskontakt, einen Steuerkontakt und einen Potentialausgleichskontakt bzw. Erdungskontakt auf. Korrespondierend dazu weist die Ladestation einen ersten Leistungs-Gegenkontakt, einen zweiten Leistungs-Gegenkontakt, einen Steuer-Gegenkontakt und einen Potentialausgleichs-Gegenkontakt auf.

Zur Herstellung des Kontakts zwischen den fahrzeugseitigen Kontakten und den ladestationsseitigen Gegenkontakten ist es beispielsweise bekannt, ein die Gegenkontakte aufweisendes Gegenkontaktelement der Ladestation vertikal nach oben anzuheben, wenn die fahrzeugseitigen Kontakte starr bzw. unbeweglich im Unterbodenbereich des Fahrzeugs festgelegt sind. Für den Fall, dass die fahrzeugseitigen Kontakte unbeweglich im Dachbereich des Fahrzeugs festgelegt sind, kann zur Herstellung des Kontakts ein die Gegenkontakte aufweisendes Gegenkontaktelement der Ladestation abgesenkt bzw. vertikal nach unten verlagert werden. Ebenso ist es beispielsweise bekannt, ein die fahrzeugseitigen Kontakte aufweisendes, im Dachbereich des Fahrzeugs angeordnetes Kontaktelement des Fahrzeugs vertikal nach oben anzuheben, wenn die ladestationsseitigen Kontakte unbeweglich an der Ladestation festgelegt sind.

Die fahrzeugseitigen Kontakte und die ladestationsseitigen Gegenkontakte kommen dabei immer gleichzeitig miteinander in Anlage. Zudem kommen auch bei einem Lösen bzw. Unterbrechen der Kontakte durch Verlagerung des ladestationsseitigen Gegenkontaktelements bzw. des fahrzeugseitigen Kontaktelements in entgegengesetzter Richtung die fahrzeugseitigen Kontakte und die ladestationsseitigen Gegenkontakte immer gleichzeitig außer Anlage. Des Weiteren kommen bei den bekannten Systemen bzw. Vorrichtungen auch bei einem Lösen der Kontakte durch unbeabsichtigtes Wegrollen des Fahrzeugs ausgehend von einer Fahrzeug-Ladeposition vorwärts oder rückwärts die fahrzeugseitigen Kontakte und die ladestationsseitigen Gegenkontakte immer gleichzeitig außer Anlage.

Im Bereich der Anlagentechnik gibt es die Forderung (DIN VDE 0100), dass der Stromfluss bzw. Signalfluss zwischen elektrischen Komponenten in einer bestimmten Reihenfolge ermöglicht bzw. hergestellt und abgestellt bzw. unterbrochen werden soll. So soll zunächst der Stromfluss über die korrespondierenden Potentialausgleichskontakte ermöglicht, anschließend der Stromfluss über die korrespondierenden Leistungskontakte ermöglicht und schließlich der Signalfluss über die korrespondierenden Steuerkontakte hergestellt werden. Zudem soll zunächst der Signalfluss über die korrespondierenden Steuerkontakte abgestellt, anschließend der Stromfluss über die korrespondierenden Leistungskontakte unterbrochen und schließlich der Stromfluss über die korrespondierenden Potentialausgleichskontakte unterbrochen werden.

Aus der EP 3 115 248 A1 ist eine Vorrichtung zum Aufladen eines Energiespeichers mit einer fahrzeugseitigen Kontakteinrichtung und einer ladestationsseitigen Kontakteinrichtung bekannt.

Die WO 2011/079215 A3 beschreibt ebenfalls eine Vorrichtung zum Aufladen eines Energiespeichers mit einer fahrzeugseitigen Kontakteinrichtung und einer ladestationsseitigen Kontakteinrichtung.

Aufgabe der Erfindung ist es, eine Vorrichtung und ein Verfahren zum Aufladen eines elektrischen Energiespeichers, insbesondere einer Traktionsbatterie, eines einen elektrischen Antrieb aufweisenden Fahrzeugs bereitzustellen, mittels denen zuverlässig und effektiv sichergestellt wird, dass der Stromfluss bzw. Signalfluss zwischen den fahrzeugseitigen Kontakten und den ladestationsseitigen Gegenkontakten normgerecht bzw. gemäß DIN VDE 0100 abgestellt bzw. unterbrochen wird.

Diese Aufgabe wird gelöst mit den Merkmalen der unabhängigen Patentansprüche. Bevorzugte Weiterbildungen sind in den Unteransprüchen offenbart.

Gemäß Patentanspruch 1 wird eine Vorrichtung zum Aufladen eines elektrischen Energiespeichers, insbesondere einer Traktionsbatterie, eines einen elektrischen Antrieb aufweisenden Fahrzeugs vorgeschlagen, mit einer dem Fahrzeug zugeordneten elektrischen Kontakteinrichtung, die einen, einen ersten Pol bildenden ersten Leistungskontakt, einen, einen zweiten Pol bildenden zweiten Leistungskontakt, einen Steuerkontakt und einen Potentialausgleichskontakt aufweist. Erfindungsgemäß sind der erste Leistungskontakt, der zweite Leistungskontakt, der Steuerkontakt und der Potentialausgleichskontakt der fahrzeugseitigen Kontakteinrichtung derart angeordnet und ausgebildet, dass ausgehend von einem Kontaktzustand, in dem jeder fahrzeugseitige Kontakt in Anlage bzw. in Kontakt mit einem zugeordneten bzw. korrespondierenden ladestationsseitigen Gegenkontakt ist, bei einer Bewegung des Fahrzeugs vorwärts und/oder rückwärts zunächst der fahrzeugseitige Steuerkontakt außer Anlage mit einem zugeordneten ladestationsseitigen Steuer-Gegenkontakt kommt, anschließend die fahrzeugseitigen Leistungskontakte außer Anlage mit zugeordneten ladestationsseitigen Leistungs-Gegenkontakten kommen und schließlich der fahrzeugseitige Potentialausgleichskontakt außer Anlage mit einem zugeordneten ladestationsseitigen Potentialausgleichs-Gegenkontakt kommt.

Auf diese Weise wird das Unterbrechen des Stromflusses bzw. das Abstellen des Signalflusses gemäß DIN VDE 0100 zuverlässig und effektiv sichergestellt, da nun bei einer unbeabsichtigten Bewegung des Fahrzeugs, beispielsweise bei einem unbeabsichtigen Wegrollen des Fahrzeugs, aus der Fahrzeug-Ladeposition vorwärts und/oder rückwärts stets zunächst die korrespondierenden Steuerkontakte, anschließend die korrespondierenden Leistungskontakte und schließlich die korrespondierenden Potentialausgleichskontakte außer Anlage bzw. außer Kontakt gebracht werden. Die Kontakte werden hier dabei ohne Ansteuerung der fahrzeugseitigen Kontakteinrichtung oder der ladestationsseitigen Gegen-Kontakteinrichtung immer in dieser Reihenfolge außer Anlage gebracht, wenn sich das Fahrzeug ausgehend von der Fahrzeug-Ladeposition vorwärts bzw. rückwärts bewegt.

Erfindungsgemäß sind die fahrzeugseitigen Kontakte durch zwei, insbesondere im Wesentlichen stabförmige bzw. gerade, Kontaktschienen gebildet. So kann die fahrzeugseitige Kontakteinrichtung baulich einfach und effektiv ausgebildet werden. Erfindungsgemäß ist dabei vorgesehen, dass jeder Kontaktschiene zwei Kontakte zugeordnet sind, um den Aufbau der fahrzeugseitigen Kontakteinrichtung weiter zu vereinfachen.

Erfindungsgemäß sind die zwei Kontakte der jeweiligen Kontaktschiene, in Schienen-Längsrichtung gesehen, mit einem definierten Längs-Abstand voneinander beabstandet. Mit diesem Längs-Abstand zwischen den zwei Kontakten der jeweiligen Kontaktschiene kann das Lösen der Kontakte in der geforderten Reihenfolge einfach und zverlässig sichergestellt werden. Bevorzugt sind die zwei Kontakte der jeweiligen Kontaktschiene mittels eines elektrisch nicht bzw. kaum leitfähigen elektrischen Isolationsmaterials voneinander elektrisch isoliert, um einem Stromfluss zwischen den Kontakten entgegenzuwirken. Bevorzugt ist das elektrische Isolationsmaterial dabei durch ein, beispielsweise mittels einer Klebeverbindung, an der jeweiligen Kontaktschiene festgelegtes Isolationselement gebildet. Weiter bevorzugt ist eine durch das elektrische Isolationsmaterial und die beiden Kontakte gebildete Anlagefläche der jeweiligen Kontaktschiene, mit der die Kontaktschiene in Anlage mit den korrespondierenden ladestationsseitigen Gegenkontakten bringbar ist, eben bzw. glatt ausgebildet, um bei einer Bewegung des Fahrzeugs aus der Ladeposition vorwärts oder rückwärts einem Verklemmen der über die Anlagefläche der jeweiligen Kontaktschiene gleitenden Gegenkontakte effektiv entgegenzuwirken.

Erfindungsgemäß weist der Steuerkontakt eine geringere Länge auf als die Leistungskontakte, wobei die Leistungskontakte auch eine geringere Länge aufweisen als der Potentialausgleichskontakt. So wird einfach und effektiv sichergestellt, dass die Kontakte in der geforderten Reihenfolge gelöst werden bzw. außer Anlage kommen. Bevorzugt ist dabei vorgesehen, dass die zwei Leistungskontakte eine identische Länge aufweisen, um die fahrzeugseitige Kontakteinrichtung einfach und kostengünstig auszubilden.

Konkret kann einer ersten Kontaktschiene beispielsweise der erste Leistungskontakt und der Steuerkontakt zugeordnet sein, während einer zweiten Kontaktschiene der zweite Leistungskontakt und der Potentialausgleichskontakt zugeordnet sind.

Gemäß einem ersten bevorzugten konkreten Ausführungsbeispiel ist vorgesehen, dass der erste Leistungskontakt der in Fahrzeug-Längsrichtung ausgerichteten ersten Kontaktschiene, in Fahrzeug-Längsrichtung gesehen, vor dem Steuerkontakt angeordnet ist. Die zwei Kontakte der ersten Kontaktschiene sind zudem, in Fahrzeug-Längsrichtung gesehen, mit einem definierten ersten Längsabstand voneinander beabstandet. Weiter ist der Steuerkontakt der ersten Kontaktschiene mit einem definierten zweiten Längsabstand von einer hinteren Stirnwand der ersten Kontaktschiene beabstandet. Der Leistungskontakt der in Fahrzeug-Längsrichtung ausgerichteten zweiten Kontaktschiene ist, in Fahrzeug-Längsrichtung gesehen, vor dem Potentialausgleichskontakt angeordnet. Die zwei Kontakte der zweiten Kontaktschiene sind mit dem definierten zweiten Längsabstand voneinander beabstandet. Weiter sind die ladestationsseitigen Leistungs-Gegenkontakte durch wenigstens eine, insbesondere durch zwei, in Querrichtung der Ladestation ausgerichtete vordere Gegenkontaktschiene gebildet. Der ladestationsseitige Steuer-Gegenkontakt und der ladestationsseitige Potentialausgleichs-Gegenkontakt sind durch wenigstens eine, insbesondere durch zwei, in Querrichtung der Ladestation ausgerichtete hintere Gegenkontaktschiene gebildet. Die vordere und die hintere Gegenkontaktschiene sind dabei, in Längsrichtung der Ladestation gesehen, mit einem definierten Schienenabstand voneinander beabstandet. Sofern dabei zwei in Querrichtung der Ladestation ausgerichtete vordere Gegenkontaktschienen vorgesehen sind, ist es bevorzugt, wenn diese beiden Gegenkontaktschienen in Querrichtung der Ladestation zueinander fluchtend angeordnet sind. Ebenso ist es für den Fall, dass zwei in Querrichtung der Ladestation ausgerichtete hintere Gegenkontaktschienen vorgesehen sind, bevorzugt, wenn diese hinteren Gegenkontaktschienen ebenfalls in Querrichtung der Ladestation zueinander fluchtend angeordnet sind.

Bei einem derartigen Aufbau ist es insbesondere bevorzugt, wenn ausgehend von der Breite G der Gegenkontakte, eines Sicherheitsabstands S und des Schienenabstands H der vorderen und hinteren Gegenkontaktschiene als vorgegebene Parameter die Länge des Potentialausgleichskontakts F, der erste Längsabstand C, der zweite Längsabstand D, die Länge E des Steuerkontakts und die Länge A der Leistungskontakte gemäß den folgenden Formel ausgebildet sind:
F=H-G; D=G+S; C=2xD; E=F-2xD; A=F-D; A=H-2xG-S
Auf diese Weise wird zuverlässig sichergestellt, dass bei einer Bewegung des Fahrzeugs ausgehend von der Fahrzeug-Ladeposition sowohl vorwärts als auch rückwärts die Kontakte stets in der geforderten Reihenfolge außer Kontakt bzw. außer Anlage kommen. Alternativ könnten die vorgegebenen Parameter auch durch die Breite G der Gegenkontakte, des Sicherheitsabstands S und durch die Länge A der Leistungskontakte gebildet sein. Der Sicherheitsabstand S ist hier durch das Produkt aus einer vorgegebenen minimalen Kriechstrecke und einem individuellen Sicherheitsfaktor gebildet. Die minimale Kriechstrecke kann dabei beispielsweise gemäß den Normen DiN_EN_50124 (VDE0115-107-1) oder IEC60664 ausgeführt sein, so dass sie je nach Anwendungsfall normgerecht bemessen ist. Der Sicherheitsfaktor kann in Abhängigkeit vom Anwendungsfall gewählt werden und kann beispielsweise in einem Bereich von 1 bis 10, insbesondere in einem Bereich von 1 bis 3, liegen.

Bei einem alternativen Ausführungsbeispiel ist der erste Leistungskontakt der in Fahrzeug-Längsrichtung ausgerichteten ersten Kontaktschiene, in Fahrzeug-Längsrichtung gesehen, hinter dem Steuerkontakt angeordnet. Die zweite Kontakte der ersten Kontaktschiene sind dabei, in Fahrzeug-Längsrichtung gesehen, mit einem definierten ersten Längsabstand voneinander beabstandet. Der Steuerkontakt der ersten Kontaktschiene ist mit einem definierten zweiten Längsabstand von einer vorderen Stirnwand der ersten Kontaktschiene beabstandet. Der erste Leistungskontakt ist mit einem definierten dritten Längsabstand von einer hinteren Stirnwand der ersten Kontaktschiene beabstandet. Der zweite Leistungskontakt der in Fahrzeug-Längsrichtung ausgerichteten zweiten Kontaktschiene ist, in Fahrzeug-Längsrichtung gesehen, vor dem Potentialausgleichskontakt angeordnet. Die zwei Kontakte der zweiten Kontaktschiene sind mit dem definierten zweiten Längsabstand voneinander beabstandet. Der zweite Leistungskontakt ist mit dem definierten dritten Längsabstand von einer vorderen Stirnwand der zweiten Kontaktschiene beabstandet. Der ladestationsseitige Potentialausgleichs-Gegenkontakt und ein erster ladestationsseitiger Leistungs-Gegenkontakt sind durch wenigstens eine, insbesondere durch zwei, in Querrichtung der Ladestation ausgerichtete hintere Gegenkontaktschiene gebildet. Der ladestationsseitige Steuer-Gegenkontakt und ein zweiter ladestationsseitiger Leistungs-Gegenkontakt sind durch wenigstens eine, insbesondere durch zwei, in Querrichtung der Ladestation ausgerichtete hintere Gegenkontaktschiene gebildet. Die wenigstens eine vordere und die wenigstens eine hintere Gegenkontaktschiene sind dabei, in Längsrichtung der Ladestation gesehen, mit einem definierten Schienenabstand voneinander beabstandet.

Bevorzugt sind ausgehend von der Breite G der Gegenkontakt, eines Sicherheitsabstands S und des Schienenabstands H der vorderen und hinteren Gegenkontaktschiene als vorgegebene Parameter die Länge des Potentialausgleichskontakts F, der erste Längsabstand C, der zweite Längsabstand D, der dritte Längsabstand I, die Länge E des Steuerkontakts und die Länge A der Leistungskontakte dabei gemäß den folgenden Formeln ausgebildet:
F=H-G; D=G+S I=D/2; C=2xD; E= F-2xD; A=F-D; A=H-2xG-S
So wird ebenfalls zuverlässig sichergestellt, dass bei einer Bewegung des Fahrzeugs ausgehend von der Fahrzeug-Ladeposition sowohl vorwärts als auch rückwärts die Kontakte stets in der geforderten Reihenfolge außer Kontakt bzw. außer Anlage kommen. Alternativ könnten auch hier die vorgegebenen Parameter durch die Breite G der Gegenkontakte, des Sicherheitsabstands S und durch die Länge A der Leistungskontakte gebildet sein. Der Sicherheitsabstand S ist auch hier durch das Produkt aus einer vorgegebenen minimalen Kriechstrecke und einem individuellen Sicherheitsfaktor gebildet.

Bei einem weiteren alternativen Ausführungsbeispiel sind einer ersten Kontaktschiene der erste und zweite Leistungskontakt zugeordnet, während einer zweiten Kontaktschiene der Steuerkontakt und der Potentialausgleichskontakt zugeordnet sind.

Vorteilhaft ist es in diesem Fall, wenn der Potentialausgleichskontakt der in Fahrzeug-Längsrichtung zweiten ausgerichteten Kontaktschiene, in Fahrzeug-Längsrichtung gesehen, hinter dem Steuerkontakt angeordnet ist. Die zwei Kontakte der zweiten Kontaktschiene sind dabei, in Fahrzeug-Längsrichtung gesehen, mit einem definierten ersten Längsabstand voneinander beabstandet. Der Steuerkontakt der zweiten Kontaktschiene ist mit einem definierten zweiten Längsabstand von einer vorderen Stirnwand der zweiten Kontaktschiene beabstandet. Der erste Leistungskontakt der in Fahrzeug-Längsrichtung ausgerichteten ersten Kontaktschiene ist, in Fahrzeug-Längsrichtung gesehen, vor dem zweiten Leistungskontakt angeordnet. Die Leistungskontakte der ersten Kontaktschiene sind mit dem definierten ersten Längsabstand voneinander beabstandet. Der erste Leistungskontakt ist mit einem definierten dritten Längsabstand von einer vorderen Stirnwand der ersten Kontaktschiene beabstandet. Weiter ist der zweite Leistungskontakt mit dem definierten dritten Längsabstand von einer hinteren Stirnwand der ersten Kontaktschiene beabstandet. Der ladestationsseitige Steuer-Gegenkontakt und ein erster ladestationsseitiger Leistungs-Gegenkontakt sind durch wenigstens eine, insbesondere durch zwei, in Querrichtung der Ladestation ausgerichtete vordere Gegenkontaktschiene gebildet. Ein zweiter ladestationsseitiger Leistungs-Gegenkontakt und der ladestationsseitige Potentialausgleichs-Gegenkontakt sind durch wenigstens eine, insbesondere durch zwei, in Querrichtung der Ladestation ausgerichtete hintere Gegenkontaktschiene gebildet. Die wenigstens eine vordere und wenigstens eine hintere Gegenkontaktschiene sind dabei, in Längsrichtung der Ladestation gesehen, mit einem definierten Schienenabstand voneinander beabstandet.

Besonders bevorzugt ist es in diesem Fall, wenn ausgehend von der Breite G der Gegenkontakte, eines Sicherheitsabstands S und des Schienenabstands H der vorderen und hinteren Gegenkontaktschiene als vorgegebene Parameter der erste Längsabstand J, der zweite Längsabstand D, der dritte Längsabstand I, die Länge E des Steuerkontakts, die Länge A der Leistungskontakte und die Länge F des Potentialausgleichskontakts gemäß den folgenden Formeln ausgebildet sind:
F=H-G; D=G+S; I=D/2; J=D+I; E=F-2xD; A=F-D; A=H-2xG-S
So wird ebenfalls zuverlässig sichergestellt, dass bei einer Bewegung des Fahrzeugs ausgehend von der Fahrzeug-Ladeposition sowohl vorwärts als auch rückwärts die Kontakte stets in der geforderten Reihenfolge außer Kontakt bzw. außer Anlage kommen. Alternativ könnten auch hier die vorgegebenen Parameter durch die Breite G der Gegenkontakte, des Sicherheitsabstands S und durch die Länge A der Leistungskontakte gebildet sein. Der Sicherheitsabstand S ist auch hier durch das Produkt aus einer vorgegebenen minimalen Kriechstrecke und einem individuellen Sicherheitsfaktor gebildet.

Des Weiteren wird auch ein Fahrzeug, insbesondere ein Nutzfahrzeug mit der erfindungsgemäßen Vorrichtung beansprucht. Die sich hieraus ergebenden Vorteile sind identisch mit den bereits gewürdigten Vorteilen der erfindungsgemäßen Vorrichtung, so dass diese an dieser Stelle ebenfalls nicht wiederholt werden.

Zur Lösung der bereits genannten Aufgabe wird ferner ein Verfahren zum Aufladen eines elektrischen Energiespeichers, insbesondere einer Traktionsbatterie, eines einen elektrischen Antrieb aufweisenden Fahrzeugs beansprucht, mit einer dem Fahrzeug zugeordneten elektrischen Kontakteinrichtung, die einen, einen ersten Pol bildenden ersten Leistungskontakt, einen, einen zweiten Pol bildenden zweiten Leistungskontakt, einen Steuerkontakt und einen Potentialausgleichskontakt aufweist, und mit einer, einer Ladestation zugeordneten Gegenkontakteinrichtung, die zu den fahrzeugseitigen Kontakten korrespondierende Gegenkontakte aufweist. Erfindungsgemäß sind der erste Leistungskontakt, der zweite Leistungskontakt, der Steuerkontakt und der Potentialausgleichskontakt der fahrzeugseitigen Kontakteinrichtung derart angeordnet und ausgebildet, dass ausgehend von einem Kontaktzustand, in dem jeder fahrzeugseitige Kontakt in Anlage bzw. in Kontakt mit dem zugeordneten ladestationsseitigen Gegenkontakt ist, bei einer Bewegung des Fahrzeugs vorwärts und/oder rückwärts zunächst der fahrzeugseitige Steuerkontakt außer Anlage mit dem zugeordneten ladestationsseitigen Steuer-Gegenkontakt kommt, anschließend die fahrzeugseitigen Leistungskontakte außer Anlage mit den zugeordneten ladestationsseitigen Leistungs-Gegenkontakten kommen und schließlich der fahrzeugseitige Potentialausgleichskontakt außer Anlage mit dem zugeordneten ladestationsseitigen Potentialausgleichs-Gegenkontakt kommt.

Die sich durch die erfindungsgemäße Verfahrensführung ergebenden Vorteile sind ebenfalls identisch mit den bereits gewürdigten Vorteilen der erfindungsgemäßen Vorrichtung, so dass diese an dieser Stelle ebenfalls nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: in einer ersten Seitenansicht ein erfindungsgemäßes Fahrzeug in einer Ladeposition mit einem in einer Grundposition angeordneten Kontaktelement;
- Figur 2: in einer zweiten Seitenansicht das Fahrzeug in der Ladeposition mit dem Kontaktelement in der Grundposition;
- Figur 3: in einer Darstellung gemäß Figur 1 das fahrzeugseitige Kontaktelement in einer mittleren Höhenposition;
- Figur 4: in einer Darstellung gemäß Figur 2 das fahrzeugseitige Kontaktelement in der mitt-leren Höhenposition;
- Figur 5: in einer Darstellung gemäß Figur 2 das fahrzeugseitige Kontaktelement in einer oberen Höhenposition;
- Figur 6: in einer schematischen Darstellung von oben das Kontaktelement des in der Ladeposition befindlichen Fahrzeugs und ladestationsseitige Gegenkontaktschienen;
- Figur 7: in einer Darstellung gemäß Figur 1 eine zweite Ausführungsform einer erfindungsgemäßen Vorrichtung;
- Figur 8: in einer Darstellung gemäß Figur 6 eine dritte Ausführungsform einer erfindungsgemäßen Vorrichtung; und
- Figur 9: in einer Darstellung gemäß Figur 6 eine vierte Ausführungsform einer erfindungsgemäßen Vorrichtung.

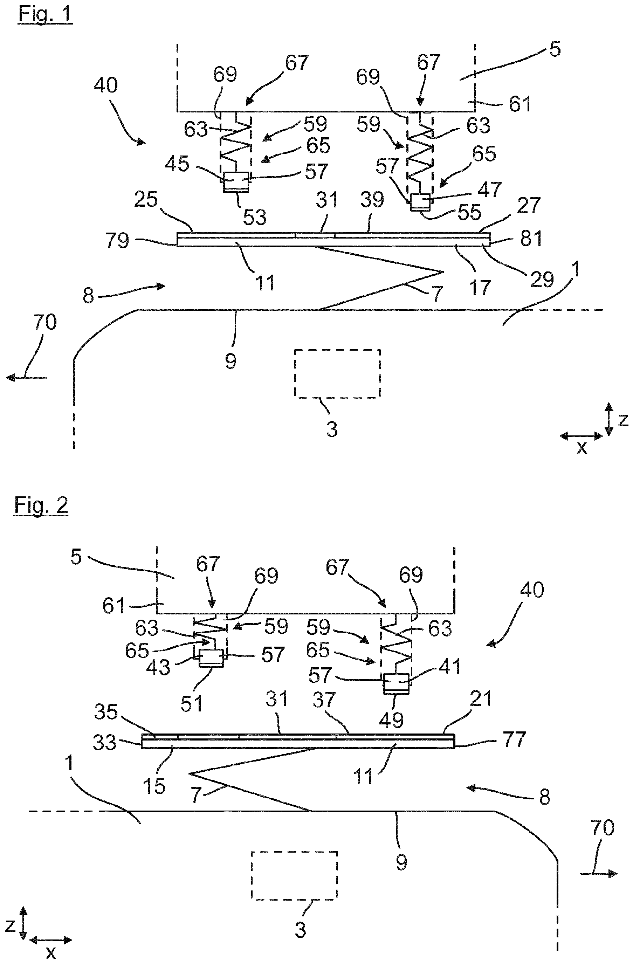

In Figur 1 ist ein Teil eines Fahrzeugs 1 in einer ersten Seitenansicht gezeigt. Das Fahrzeug 1 weist einen elektrischen Antrieb mit einem in Figur 1 schematisch angedeuteten elektrischen Energiespeicher 3, insbesondere eine Traktionsbatterie, auf und kann beispielsweise durch einen Omnibus oder durch einen Lastkraftwagen gebildet sein. Der elektrische Antrieb des Fahrzeugs 1 kann beispielsweise durch einen rein elektrischen Antrieb oder durch einen Hybridantrieb mit Elektromotor und Verbrennungsmotor gebildet sein. Bei der Darstellung gemäß Figur 1 befindet sich das Fahrzeug 1 in einer definierten Ladeposition, in der der elektrische Energiespeicher 3 des Fahrzeugs 1 mittels einer in Figur 1 teilweise gezeigten Ladestation 5 aufgeladen werden kann.

Die Ladestation 5 kann insgesamt beispielsweise im Wesentlichen I- oder L-förmig ausgebildet sein, wobei dann ein Endbereich der Ladestation starr bzw. unbeweglich am Boden befestigt ist und der andere Endbereich der Ladestation vom Boden beabstandet ist und den in Figur 1 gezeigten Aufbau aufweist.

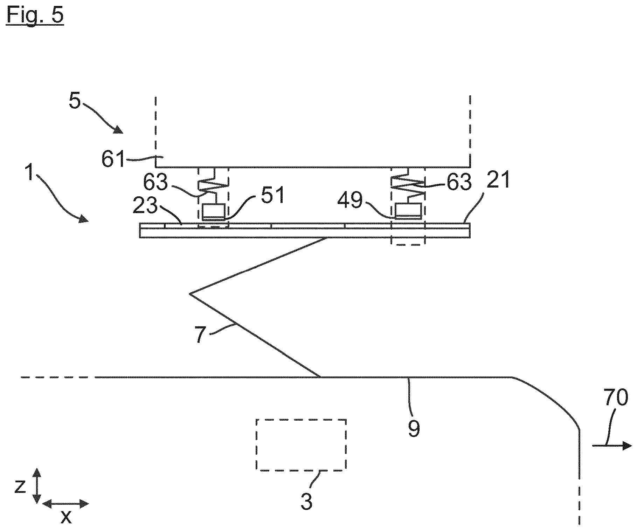

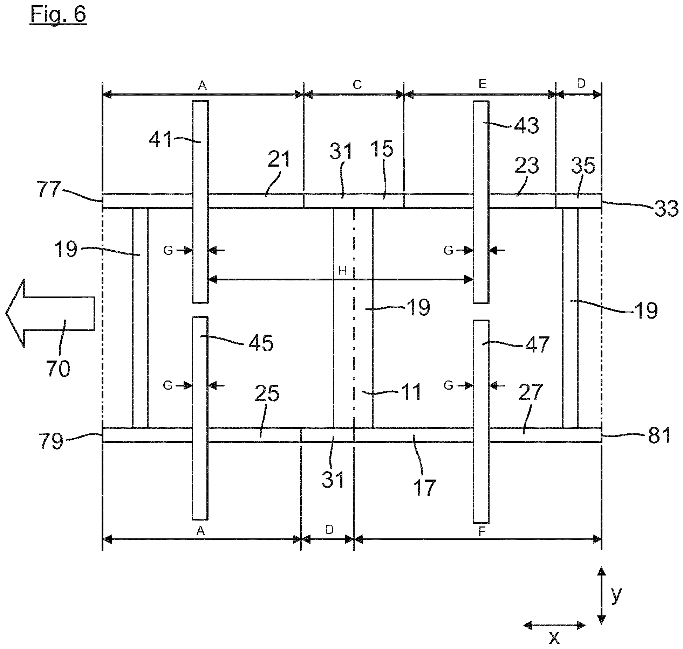

Wie in Figur 1 weiter gezeigt ist, weist das Fahrzeug 1 hier beispielhaft im Dachbereich eine Kontakteinrichtung 8 mit einem mittels einer schematisch angedeuteten Verlagerungseinrichtung 7 relativ zu einem Fahrzeugdach 9 in Fahrzeug-Hochrichtung z bzw. in Vertikalrichtung verlagerbaren Kontaktelement 11 auf. Mittels der Verlagerungseinrichtung 7 kann das Kontaktelement 11 zwischen einer in Figur 1 gezeigten Grundposition bzw. unteren Höhenposition und einer in Figur 5 gezeigten oberen Höhenposition relativ zu dem Dach 9 des Fahrzeugs 1 in Fahrzeug-Hochrichtung z verlagert werden. Die Verlagerungseinrichtung 7 kann dabei beispielsweise durch einen elektrisch betätigbaren Hebelmechanismus gebildet sein. Wie aus der Ansicht von oben gemäß Figur 6 deutlicher hervorgeht, weist das fahrzeugseitige Kontaktelement 11 zwei im Wesentlichen stabförmige bzw. gerade ir Fahrzeug-Längsrichtung x ausgerichtete sowie in Fahrzeug-Querrichtung y mit einem definierten Abstand voneinander beabstandete Kontaktschienen 15, 17 auf, die über mehrere Verbindungselemente 19 starr miteinander verbunden sind. Jeder Kontaktschiene 15, 17 sind hier zwei elektrische Kontakte zugeordnet. Die erste Kontaktschiene 15 weist hier beispielhaft einen, einen ersten Pol bildenden Leistungskontakt 21 und einen Steuerkontakt 23 auf. Die zweite Kontaktschiene 17 weist hier beispielhaft einen, einen zweiten Pol bildenden zweiten Leistungskontakt 25 und einen Potentialausgleichskontakt 27 auf.

Der erste Leistungskontakt der in Fahrzeug-Längsrichtung x ausgerichteten ersten Kontaktschiene 15 ist hier dabei, in Fahrzeug-Längsrichtung x gesehen, vor dem Steuerkontakt 23 der ersten Kontaktschiene 15 angeordnet. Der zweite Leistungskontakt 25 der in Fahrzeug-Längsrichtung x ausgerichteten zweiten Kontaktschiene 17 ist hier, in Fahrzeug-Längsrichtung x gesehen, vor dem Potentialausgleichskontakt 27 der Kontaktschiene 17 angeordnet. Bei der in Figur 1 gezeigten ersten Seitenansicht des Fahrzeugs 1 ist hier nur die zweite Kontaktschiene 17 des fahrzeugseitigen Kontaktelements 11 ersichtlich. In Figur 2 ist das Fahrzeug 1 in einer zweiten Seitenansicht gezeigt, bei der die erste Kontaktschiene 15 des Fahrzeug 1 ersichtlich ist.

Wie aus Figur 1 und Figur 2 weiter hervorgeht, weist jede Kontaktschiene 15, 17 hier einen Trägerkörper 29 auf, an dem die jeweiligen Kontakte bzw. Kontaktteile festgelegt sind. Der Trägerkörper 29 ist hier aus einem elektrischen Isolationsmaterial gefertigt. Die beiden Kontakte der jeweiligen Kontaktschiene 15, 17 sind hier zudem, in Schienen-Längsrichtung bzw. in Fahrzeug-Längsrichtung x gesehen, jeweils mit einem definierten Längsabstand voneinander beabstandet. Zwischen den beiden Kontakte der jeweiligen Kontaktschiene 15, 17 ist ein elektrisches Isolationselement 31 aus einem elektrischen Isolationsmaterial angeordnet und, beispielsweise mittels einer Klebeverbindung, an dem Trägerkörper 29 festgelegt. Alternativ wäre es aber auch denkbar, dass das elektrische Isolationselement 31 und der Trägerkörper 29 materialeinheitlich und/oder einstückig miteinander verbunden sind bzw. einteilig gefertigt sind.

Gemäß Figur 2 ist hier zudem der Steuerkontakt 23 der ersten Kontaktschiene 15 von einer hinteren Stirnwand 33 der ersten Kontaktschiene 15 beabstandet. Zwischen dem Steuerkontakt 23 und der hinteren Stirnwand 33 der ersten Kontaktschiene 15 ist hier ebenfalls ein elektrisches Isolationselement 35 aus einem elektrischen Isolationsmaterial an dem Trägerkörper 29 der Kontaktschiene 15 festgelegt. Alternativ könnten auch das elektrische Isolationselement 35 und der Trägerkörper 29 materialeinheitlich und/oder einstückig miteinander verbunden sein.

Der erste Leistungskontakt 21, der Steuerkontakt 23 sowie die elektrischen Isolationselemente 31, 35 der ersten Kontaktschiene 15 sind hier zudem derart ausgebildet, dass eine, eine Anlagefläche bildende obere Wand 37 der ersten Kontaktschiene 15, mit der die erste Kontaktschiene 15 in Anlage mit der Ladestation 5 bringbar ist, durchgehend eben bzw. glatt, d.h. im Wesentlichen ohne Sprünge und Kanten, ausgebildet ist. Zudem sind der zweite Leistungskontakt 25, der Potentialausgleichskontakt 27 und das elektrische Isolationselement 31 der zweiten Kontaktschiene 17 hier ebenfalls derart ausgebildet, dass eine, eine Anlagefläche bildende obere Wand 39 der zweiten Kontaktschiene 17, mit der die zweite Kontaktschiene 17 in Anlage mit der Ladestation 5 gebracht werden kann, durchgehend eben bzw. glatt ist.

Des Weiteren sind die Kontaktschienen 15, 17 hier stets, d.h. auch während der Verlagerung des Kontaktelements 11 von der Grundposition in die obere Höhenposition und umgekehrt, im Wesentlichen parallel zu dem Dach 9 des Fahrzeugs 1 verlaufend ausgerichtet.

An dieser Stelle ist anzumerken, dass in den Figuren die Fahrzeug-Längsrichtung x der Ladestation-Längsrichtung, die Fahrzeug-Querrichtung y der Ladestation-Querrichtung und die Fahrzeug-Hochrichtung z der Ladestation-Hochrichtung entspricht.

Wie weiter in Figur 6 gezeigt ist, weist die Ladestation 5 hier beispielhaft vier in Ladestation-Querrichtung y ausgerichtete Gegenkontaktschienen 41, 43, 45, 47 auf, die Bestandteil einer Gegenkontakteinrichtung 40 (Fig. 1) der Ladestation 5 sind. Die Gegenkontaktschiene 41 bildet hier dabei einen ersten Leistungs-Gegenkontakt 49 (Figur 2) aus, während die in Ladestation-Längsrichtung x gesehen, hinter der Gegenkontaktschiene 41 angeordnete Gegenkontaktschiene 43 einen Steuer-Gegenkontakt 51 (Figur 2) ausbildet. Die Gegenkontaktschiene 45 bildet einen zweiten Leistungs-Gegenkontakt 53 (Figur 1) aus, während die, in Ladestation-Längsrichtung x gesehen, hinter der Gegenkontaktschiene 45 angeordnete Gegenkontaktschiene 47 einen Potentialausgleich-Gegenkontakt 55 (Figur 1) ausbildet. Die vorderen Gegenkontaktschienen 41, 45 sind hier zudem in Ladestation-Querrichtung y zueinander fluchtend angeordnet. Die hinteren Gegenkontaktschienen 43, 47 sind hier ebenfalls in Ladestation-Querrichtung y zueinander fluchtend angeordnet.

Wie weiter aus den Figuren 1 und 2 hervorgeht, weist jede Kontaktschiene 41, 43, 45, 47 hier beispielhaft einen Trägerkörper 57 auf, an dem der jeweilige Gegenkontakt bzw. das jeweilige Gegenkontaktteil 49, 51, 53, 55 angebracht bzw. festgelegt ist. Zudem ist hier jede Gegenkontaktschiene 41, 43, 45, 47 mittels einer schematisch angedeuteten Fixiereinrichtung 59 relativ zu einem bodenseitig festgelegten Basiskörper bzw. Trägerkörper 61 der Ladestation 5 in Vertikalrichtung verlagerbar an dem Basiskörper 61 festgelegt, dergestalt, dass die Gegenkontaktschienen 41, 43, 45, 47 auch relativ zueinander in Vertikalrichtung verlagert werden können.

Jede Fixiereinrichtung 59 ist hier beispielhaft durch ein in Vertikalrichtung wirkendes Federelement 63 gebildet, das mit einem Verbindungsbereich 65 mit der jeweiligen Gegenkontaktschiene 41, 43, 45, 47 und mit einem anderen Verbindungsbereich 67 mit dem Basiskörper 61 der Ladestation 5 verbunden ist. Zudem weist jede Fixiereinrichtung 59 hier auch einen mit gestrichelten Linien angedeutete Führung 69 auf, mit der die jeweilige Gegenkontaktschiene 41, 43, 45, 47 quer zur Vertikalrichtung geführt wird, dergestalt, dass sich die jeweilige Gegenkontaktschiene 41, 43, 45, 47 nicht verdrehen und nur in Vertikalrichtung relativ zur dem Grundkörper 61 der Ladestastion 5 verlagert werden kann. Optional kann der jeweiligen Gegenkontaktschiene 41, 43, 45, 47 zudem ein hier nicht gezeigtes, in Vertikalrichtung wirkendes Stoßdämpferelement zugeordnet sein, mittels dem Bewegungsenergie der jeweiligen sich hin zu dem Aufnahmekörper 61 bewegenden Gegenkontaktschiene 41, 43, 45, 47 abgebaut werden kann.

Des Weiteren befindet sich in dem in Figur 1 und 2 gezeigten Nicht-Kontaktzustand, in dem das Kontaktelement 11 des Fahrzeugs 1 und die Gegenkontaktschienen 41, 43, 45, 47 nicht miteinander in Anlage sind, jede Gegenkontaktschiene 41, 43, 45, 47 in einer definierten Grundposition. Dabei befindet sich der Potentialausgleichs-Gegenkontakt 55 in Vertikalrichtung unterhalb der Leistungs-Gegenkontakte 49, 53. Die Leistungs-Gegenkontakte 49, 53 befinden sich im Wesentlichen in einer identischen Höhenposition. Der Steuer-Gegenkontakt 51 befindet sich in Vertikalrichtung oberhalb der Leistungs-Gegenkontakte 49, 53.

Zur Herstellung des Kontakts zwischen den fahrzeugseitigen Kontakten 21, 23, 25, 27 und den ladestationsseitigen Gegenkontakten 49, 51, 53, 55 wird das Fahrzeug 1 zunächst in eine definierte Ladeposition relativ zu der Ladestation 5 gefahren. Anschließend wird das Kontaktelement 11 mittels der Verlagerungseinrichtung 7 von der in Fig. 1 und Fig. 2 gezeigten Grundposition in die in Figur 5 gezeigte obere Höhenposition angehoben bzw. vertikal nach oben verlagert. Bei diesem Anheben des Kontaktelements 11 kommt zunächst der fahrzeugseitige Potentialausgleichskontakt 27 in Anlage mit dem ladestationsseitigen Potentialausgleichs-Gegenkontakt 55 und das Kontaktelement 11 verlagert die den Potentialausgleichs-Gegenkontakt 55 bildende Gegenkontaktschiene 47 unter Spannung des zugeordneten Federelements 63 vertikal nach oben.

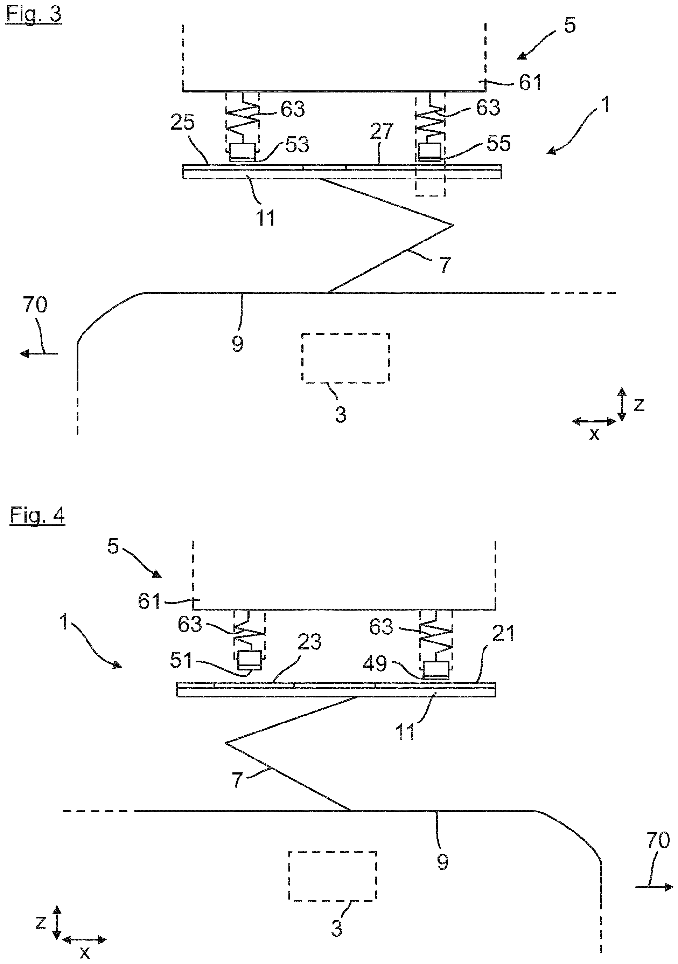

Wie in Figur 3 und Figur 4 gezeigt ist, kommen dann bei weiterer Verlagerung des Kontaktelements 11 nach oben die Leistungskontakte 21, 25 des Kontaktelements 11 in Anlage mit den Leistungs-Gegenkontakten 49, 53 der Ladestation 5. Die die Leistungs-Gegenkontakte 49, 53 bildenden Gegenkontaktschienen 41, 45 werden dann zusammen mit der Gegenkontaktschiene 47 unter Spannung der jeweiligen Federelemente 63 von dem Kontaktelement 11 des Fahrzeugs 1 nach oben verlagert. Bei weiterer Verlagerung des Kontaktelements 11 nach oben kommt dann auch der fahrzeugseitige Steuerkontakt 23 in Anlage mit dem ladestationsseitigen Steuer-Gegenkontakt 51. Schließlich werden dann alle Gegenkontakteschienen 41, 43, 45, 47 unter Spannung der Federelemente 63 der Ladestation 5 mittels des Kontaktelements 11 angehoben, bis sich das Kontaktelement 11 in der in Figur 5 gezeigten oberen Höhenposition befindet.

Zum Lösen des Kontakts zwischen den fahrzeugseitigen Kontakten 21, 23, 25, 27 und den ladestationsseitigen Kontakten 49, 51, 53, 55 wird das Kontaktelement 11 dann wieder von der oberen Höhenposition in die in den Figuren 1 und 2 untere Grundposition verlagert, wobei die Kontakte hier dann in umgekehrter Reihenfolge außer Anlage kommen.

Des Weiteren sind die Kontakte 21, 23, 25, 27 des Fahrzeugs 1 hier derart angeordnet und ausgebildet, dass ausgehend von einem Kontaktzustand, in dem jeder fahrzeugseitige Kontakt 21, 23, 25, 27 in Anlage mit dem korrespondierenden ladestationsseitigen Gegenkontakt 49, 51, 53, 55 ist, bei einer Bewegung des Fahrzeugs 1 vorwärts und rückwärts zunächst der fahrzeugseitige Steuerkontakt 23 außer Anlage mit dem ladestationsseitigen Steuer-Gegenkontakt 51 kommt, anschließend die fahrzeugseitigen Leistungskontakte 21, 25 außer Anlage mit den ladestationsseitigen Leistungs-Gegenkontakten 49, 53 kommen und schließlich der fahrzeugseitige Potentialausgleichskontakt 27 außer Anlage mit dem ladestationsseitigen Potentialausgleichs-Gegenkontakt 55 kommt.

Um ein derartiges Lösen der Kontakte bei einer Bewegung des Fahrzeugs 1 vorwärts bzw. in Fahrtrichtung 70 (Fig. 6) und rückwärts bzw. entgegen der Fahrtrichtung 70 zu realisieren, weist der fahrzeugseitige Steuerkontakt 23 hier, in Fahrzeug-Längsrichtung x gesehen, eine geringere Länge auf als die fahrzeugseitigen Leistungskontakte 21, 25 (siehe hierzu Fig. 6). Zudem weisen hier auch die Leistungskontakte 21, 25 des Fahrzeugs 1 eine geringere Länge auf als der fahrzeugseitige Potentialausgleichskontakt 27. Die fahrzeugseitigen Leistungskontakte 21, 25 weisen hier beispielhaft eine identische Länge auf.

Ausgehend von einer Breite G der Gegenkontakte, eines Sicherheitsabstands S und eines Schienenabstands H zwischen den vorderen Gegenkontaktschienen 41, 45 und den hinteren Gegenkontaktschienen 43, 47 als vorgegebene Parameter sind eine Länge des Potentialausgleichskontakts F, ein erster Längsabstand C zwischen den zwei Kontakten der ersten Kontaktschiene 15, ein zweiter Längsabstand D zwischen den zwei Kontakten der zweiten Kontaktschiene 17, eine Länge E des Steuerkontakts 23 des Fahrzeugs 1 und die Länge A der Leistungskontakte 21, 25 des Fahrzeugs 1 hier dabei gemäß den folgenden Formeln ausgebildet:
F=H-G; D=G+S; C=2xD; E=F-2xD; A=F-D; A=H-2xG-S
Auf diese Weise wird ausgehend von der Breite G der Gegenkontakte 49, 51, 53, 55, des Sicherheitsabstands S und des Schienenabstands H als vorgegebene Parameter zuverlässig sichergestellt, dass sich die Kontakte in der genannten Weise voneinander lösen, wenn sich das Fahrzeug 1 ausgehend von einer Ladeposition vorwärts und rückwärts bewegt. Dies wird hier für alle möglichen Ladepositionen des Fahrzeugs 1 relativ zu der Ladestation 5 gewährleistet, in denen der Kontaktzutand hergestellt werden kann.

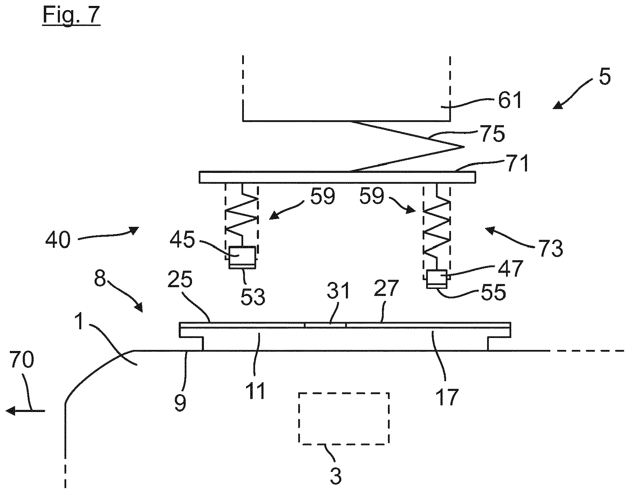

In Figur 7 ist eine zweite Ausführungsform einer erfindungsgemäßen Vorrichtung gezeigt. Im Vergleich zu der in Figur 1 gezeigten ersten Ausführungsform sind die fahrzeugseitigen Kontaktschienen 15, 17 hier starr bzw. unbeweglich an dem Fahrzeug 1 festgelegt. Zudem sind die Gegenkontaktschienen 41, 43, 45, 47 hier über die jeweilige Fixiereinrichtung 59 an einem im Wesentlichen plattenförmigen Fixierkörper 71 der Ladestation 5 festgelegt. Der Fixierkörper 71 und die Gegenkontaktschienen 41, 43, 45 47 bilden hier dabei ein Gegenkontaktelement 73, das in Vertikalrichtung relativ zu dem Basiskörper 61 der Ladestation 5 verlagerbar an dem Basiskörper 61 der Ladestation 5 festgelegt ist. Das Gegenkontaktelement 73 kann hier dabei mittels einer in Figur 7 schematisch angedeuteten Verlagerungseinrichtung 75 vertikal verlagert werden, die ebenfalls durch einen elektrisch betätigbaren Hebelmechanismus gebildet sein kann.

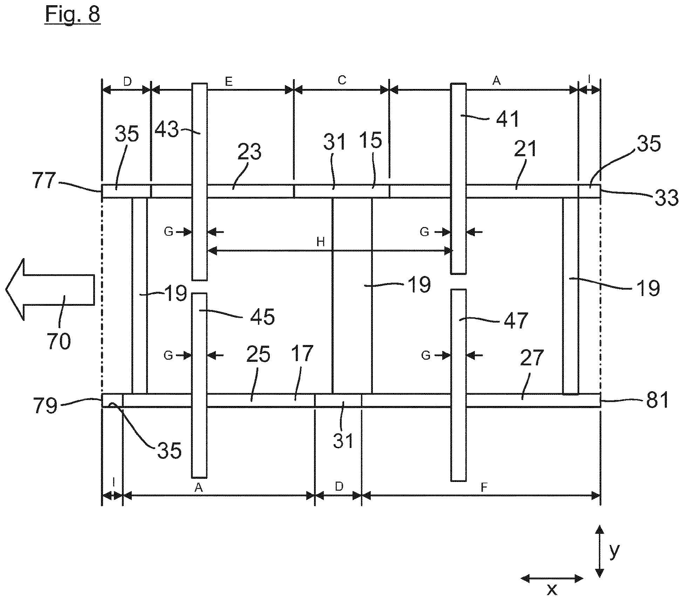

In Figur 8 ist eine dritte Ausführungsform einer erfindungsgemäßen Vorrichtung gezeigt. Im Vergleich zu der in Figur 6 gezeigten ersten Ausführungsform ist hier der Leistungskontakt 21 der ersten Kontaktschiene 15, in Fahrzeug-Längsrichtung x gesehen, hinter dem Steuerkontakt 23 der ersten Kontaktschiene 17 angeordnet. Zudem ist hier der Leistungskontakt 21 der ersten Kontaktschiene 15 mit einem definierten Abstand I von der hinteren Stirnwand 33 der Kontaktschiene 15 beabstandet. Der Steuerkontakt 21 der ersten Kontaktschiene 15 ist hier weiter mit einem Abstand D von einer vorderen Stirnwand 77 der ersten Kontaktschiene 15 beabstandet. Des Weiteren ist hier auch der Leistungskontakt 25 der zweiten Kontaktschiene 17 mit dem Abstand I von einer vorderen Stirnwand 79 der zweiten Kontaktschiene 17 beabstandet.

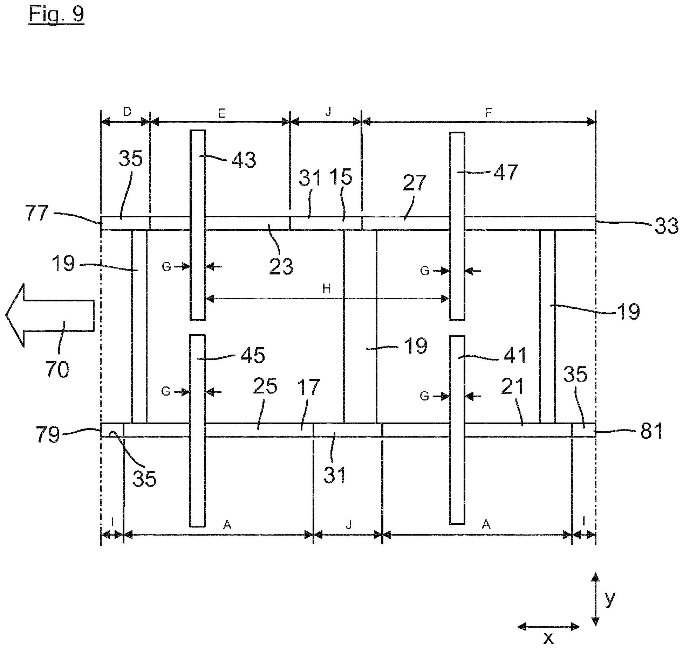

Ausgehend von der Breite G der Gegenkontakte 49, 51, 53, 55, eines Sicherheitsabstands S und des Schienenabstands H zwischen den vorderen Gegenkontaktschienen 41, 45 und den hinteren Gegenkontaktschienen 43, 47 als vorgegebenen Parameter sind die Länge des Potentialausgleichskontakts F, der Längsabstand C zwischen dem Steuerkontakt 23 und dem Leistungskontakt 21, der Längsabstand D zwischen dem Leistungskontakt 25 und dem Potentialausgleichskontakt 27, der Längsabstand I, die Länge E des Steuerkontakts 23 und die Länge A der Leistungskontakte 21, 25 hier gemäß den folgenden Formeln ausgebildet:
F=H-G; D=G+S; I=D/2; C=2xD; E=F-2xD; A=F-D; A=H-2xG-S
In Figur 9 ist eine vierte Ausführungsform der erfindungsgemäßen Vorrichtung gezeigt. Im Vergleich zu der in Figur 8 gezeigten vierten Ausführungsform ist der Potentialausgleichskontakt 27 des Fahrzeugs hier der ersten Kontaktschiene 15 zugeordnet, während der erste Leistungskontakt 21 hier der zweiten Kontaktschiene 17 zugeordnet ist.

Ausgehend von der Breite der Gegenkontakt 49, 51, 53, 55, des Sicherheitsabstands S und des Schienenabstands H zwischen den vorderen Gegenkontaktschienen 41, 45 und den hinteren Gegenkontaktschienen 43, 47 als vorgegebene Parameter sind ein Längsabstand J, der hier der Abstand zwischen dem Steuerkontakt 23 und dem Potentialausgleichskontakt 27 der ersten Kontaktschiene 15 und gleichzeitig auch der Abstand zwischen den Leistungskontakten 21, 25 der zweiten Kontaktschiene 17 ist, der Längsabstand E zwischen dem Steuerkontakt 22 und der vorderen Stirnwand 77 der ersten Kontaktschiene 15, der Längsabstand I, der hier der Abstand zwischen dem zweiten Leistungskontakt 25 und der vorderen Stirnwand 79 der zweiten Kontaktschiene und gleichzeitig auch der Abstand zwischen dem ersten Leistungskontakt 21 der zweiten Kontaktschiene und einer hinteren Stirnwand 81 der zweiten Kontaktschiene 17 ist, die Länge I des Steuerkontakts 23, die Länge A der Leistungskontakte 21, 25 und die Länge F des Potentialausgleichskontakts 27 gemäß den folgenden Formeln ausgebildet:
F=H-G; D=G+S; I=D/2; J=D+I; E=F-2xD; A=F-D; A=H-2xG-S

### Bezugszeichenliste

- 1: Fahrzeug
- 3: elektrischer Energiespeicher
- 5: Ladestation
- 7: Verlagerungseinrichtung
- 8: Kontakteinrichtung
- 9: Dach
- 11: Kontaktelement
- 15: Kontaktschiene
- 17: Kontaktschiene
- 19: Verbindungselement
- 21: erster Leistungskontakt
- 23: Steuerkontakt
- 25: zweiter Leistungskontakt
- 27: Potentialausgleichskontakt
- 29: Trägerkörper
- 31: elektrisches Isolationselement
- 33: hintere Stirnwand
- 35: elektrisches Isolationselement
- 37: obere Wand
- 39: obere Wand
- 40: Gegen-Kontakteinrichtung
- 41: Gegenkontaktschiene
- 43: Gegenkontaktschiene
- 45: Gegenkontaktschiene
- 47: Gegenkontaktschiene
- 49: erster Leistungs-Gegenkontakt
- 51: Steuer-Gegenkontakt
- 53: zweiter Leistungs-Gegenkontakt
- 55: Potentialausgleichs-Gegenkontakt
- 57: Trägerkörper
- 59: Fixiereinrichtung
- 61: Basiskörper
- 63: Federelement
- 65: Verbindungsbereich
- 67: Verbindungsbereich
- 69: Führung
- 70: Fahrtrichtung
- 71: Fixierkörper
- 73: Gegenkontaktelement
- 75: Verlagerungseinrichtung
- 77: vordere Stirnwand
- 79: vordere Stirnwand
- 81: hintere Stirnwand

## Patentansprüche

1. Vorrichtung zum Aufladen eines elektrischen Energiespeichers eines einen elektrischen Antrieb aufweisenden Fahrzeugs, mit einer dem Fahrzeug (1) zugeordneten elektrischen Kontakteinrichtung (8), die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation (5) zugeordneten Gegenkontakteinrichtung (40), die zu den fahrzeugseitigen Kontakten (21, 23, 25, 27) korrespondierende Gegenkontakte (49, 51, 53, 55) aufweist,
wobei die fahrzeugseitigen Kontakte (21, 23, 25, 27) durch zwei Kontaktschienen (15, 17) gebildet sind, wobei jeder Kontaktschiene (15, 17) zwei Kontakte (21, 23, 25, 27) zugeordnet sind,
wobei die zwei Kontakte (21, 23, 25, 27) der jeweiligen Kontaktschiene (15, 17), in Schienen-Längsrichtung gesehen, mit einem definierten Längs-Abstand voneinander beabstandet sind,
wobei der Steuerkontakt (23) eine geringere Länge aufweist als die Leistungskontakte (21,25),
wobei die Leistungskontakte (21, 25) eine geringere Länge aufweisen als der Potentialausgleichskontakt (27), und
wobei der erste Leistungskontakt (21), der zweite Leistungskontakt (25), der Steuerkontakt (23) und der Potentialausgleichskontakt (27) der fahrzeugseitigen Kontakteinrichtung (8) derart angeordnet und ausgebildet sind,
dass ausgehend von einem Kontaktzustand, in dem jeder fahrzeugseitige Kontakt (21, 23, 25, 27) in Anlage mit einem zugeordneten ladestationsseitigen Gegenkontakt (49, 51, 53, 55) ist, bei einer Bewegung des Fahrzeugs (1) vorwärts und/oder rückwärts zunächst der fahrzeugseitige Steuerkontakt (23) außer Anlage mit einem zugeordneten ladestationsseitigen Steuer-Gegenkontakt (51) kommt, anschließend die fahrzeugseitigen Leistungskontakte (21, 25) außer Anlage mit zugeordneten ladestationsseitigen Leistungs-Gegenkontakten (49, 53) kommen und schließlich der fahrzeugseitige Potentialausgleichskontakt (27) außer Anlage mit einem zugeordneten ladestationsseitigen Potentialausgleichs-Gegenkontakt (55) kommt.

2. Vorrichtung nach Anspruch 1, **dadurch gekennzeichnet, dass** die zwei Kontakte (21, 23, 25, 27) der jeweiligen Kontaktschiene (15, 17) mittels eines elektrischen Isolationsmaterials voneinander elektrisch isoliert sind.

3. Vorrichtung nach Anspruch 1 oder 2, **dadurch gekennzeichnet, dass** die zwei Leistungskontakte (21, 25) eine identische Länge aufweisen.

4. Vorrichtung nach einem der vorhergehenden Ansprüche, **dadurch gekennzeichnet, dass** einer ersten Kontaktschiene (15) der erste Leistungskontakt (21) und der Steuerkontakt (23) zugeordnet sind, und dass einer zweiten Kontaktschiene (17) der zweite Leistungskontakt (25) und der Potentialausgleichskontakt (27) zugeordnet sind.

5. Vorrichtung nach Anspruch 4, **dadurch gekennzeichnet, dass** der erste Leistungskontakt (21) der in Fahrzeug-Längsrichtung (x) ausgerichteten ersten Kontaktschiene (15), in Fahrzeug-Längsrichtung (x) gesehen, vor dem Steuerkontakt (23) angeordnet ist,
dass die zwei Kontakte (21, 23) der ersten Kontaktschiene (15), in Fahrzeug-Längsrichtung (x) gesehen, mit einem definierten ersten Längsabstand (C) voneinander beabstandet sind,
dass der Steuerkontakt (23) der ersten Kontaktschiene (15) mit einem definierten zweiten Längsabstand von einer hinteren Stirnwand (33) der ersten Kontaktschiene (15) beabstandet ist,
dass der Leistungskontakt (25) der in Fahrzeug-Längsrichtung (x) ausgerichteten zweiten Kontaktschiene (17) vor dem Potentialausgleichskontakt (27) angeordnet ist,
dass die zwei Kontakte (25, 27) der zweiten Kontaktschiene (17) mit dem definierten zweiten Längsabstand (D) voneinander beabstandet sind,
dass die ladestationsseitigen Leistungs-Gegenkontakte (49, 53) durch wenigstens eine, insbesondere durch zwei, in Querrichtung (y) der Ladestation (5) ausgerichtete vordere Gegenkontaktschiene (41, 45) gebildet sind, und
dass der ladestationsseitige Steuer-Gegenkontakt (51) und der ladestationsseitige Potentialausgleichs-Gegenkontakt (55) durch wenigstens eine, insbesondere durch zwei, in Querrichtung (y) der Ladestation (5) ausgerichtete hintere Gegenkontaktschiene (43, 47) gebildet ist, wobei die vordere und die hintere Gegenkontaktschiene (41, 43, 45, 47), in Längsrichtung (x) der Ladestation (5) gesehen, mit einem definierten Schienenabstand (H) voneinander beabstandet sind.

6. Vorrichtung nach Anspruch 5, **dadurch gekennzeichnet, dass** ausgehend von der Breite G der Gegenkontakte, eines Sicherheitsabstands S und des Schienenabstands H der vorderen und hinteren Gegenkontaktschiene als vorgegebene Parameter der erste Längsabstand C, der zweite Längsabstand D, die Länge E des Steuerkontakts, die Länge A der Leistungskontakte und die Länge F des Potentialausgleichskontakts gemäß den folgenden Formeln ausgebildet sind:
F=H-G; D=G+S; C=2xD; E=F-2xD; A=F-D; A=H-2xG-S

7. Vorrichtung nach Anspruch 6, **dadurch gekennzeichnet, dass** der erste Leistungskontakt (21) der in Fahrzeug-Längsrichtung (x) ausgerichteten ersten Kontaktschiene (15), in Fahrzeug-Längsrichtung (x) gesehen, hinter dem Steuerkontakt (23) angeordnet ist,
dass die zwei Kontakte (21, 23) der ersten Kontaktschiene (15), in Fahrzeug-Längsrichtung (x) gesehen, mit einem definierten ersten Längsabstand (C) voneinander beabstandet sind,
dass der Steuerkontakt (23) der ersten Kontaktschiene (15) mit einem definierten zweiten Längsabstand (D) von einer vorderen Stirnwand (77) der ersten Kontaktschiene (15) beabstandet ist,
dass der erste Leistungskontakt (21) mit einem definierten dritten Längsabstand (I) von einer hinteren Stirnwand (33) der ersten Kontaktschiene (15) beabstandet ist,
dass der zweite Leistungskontakt (25) der in Fahrzeug-Längsrichtung (x) ausgerichteten zweiten Kontaktschiene (17) vor dem Potentialausgleichskontakt (27) angeordnet ist,
dass die zwei Kontakte (25, 27) der zweiten Kontaktschiene (17) mit dem definierten zweiten Längsabstand (D) voneinander beabstandet sind,
dass der zweite Leistungskontakt (25) mit dem definierten dritten Längsabstand (I) von einer vorderen Stirnwand (79) der zweiten Kontaktschiene (17) beabstandet ist,
dass der ladestationsseitige Potentialausgleichs-Gegenkontakt (55) und ein erster ladestationsseitiger Leistungs-Gegenkontakt (49) durch wenigstens eine, insbesondere durch zwei, in Querrichtung (y) der Ladestation (5) ausgerichtete hintere Gegenkontaktschiene (41, 47) gebildet sind, und
dass der ladestationsseitige Steuer-Gegenkontakt (51) und ein zweiter ladestationsseitiger Leistungs-Gegenkontakt (53) durch wenigstens eine, insbesondere durch zwei, in Querrichtung (y) der Ladestation (5) ausgerichtete hintere Gegenkontaktschiene (43, 45) gebildet sind, wobei die vordere und die hintere Gegenkontaktschiene (41, 43, 45, 47) in Längsrichtung (x) der Ladestation (5) gesehen, mit einem definierten Schienenabstand (H) voneinander beabstandet sind.

8. Vorrichtung nach Anspruch 7, **dadurch gekennzeichnet, dass** ausgehend von der Breite G der Gegenkontakte, eines Sicherheitsabstands S und des Schienenabstands H der vorderen und hinteren Gegenkontaktschiene als vorgegebene Parameter der erste Längsabstand C, der zweite Längsabstand D, der dritte Längsabstand I, die Länge E des Steuerkontakts, die Länge A der Leistungskontakte und die Länge F des Potentialausgleichskontakts gemäß den folgenden Formeln ausgebildet sind:
F=H-G; D=G+S; I=D/2; C=2xD; E=F-2xD; A=F-D; A=H-2xG-S

9. Vorrichtung nach einem der Ansprüche 1 bis 3, **dadurch gekennzeichnet, dass** einer ersten Kontaktschiene (17) der erste und zweite Leistungskontakt (21, 25) zugeordnet sind, und dass einer zweiten Kontaktschiene (15) der Steuerkontakt (23) und der Potentialausgleichskontakt (27) zugeordnet sind.

10. Vorrichtung nach Anspruch 9, **dadurch gekennzeichnet, dass** der Potentialausgleichskontakt (27) der in Fahrzeug-Längsrichtung (x) ausgerichteten zweiten Kontaktschiene (15), in Fahrzeug-Längsrichtung (x) gesehen, hinter dem Steuerkontakt (23) angeordnet ist,
dass die zwei Kontakte (23, 27) der zweiten Kontaktschiene (15), in Fahrzeug-Längsrichtung (x) gesehen, mit einem definierten ersten Längsabstand (J) voneinander beabstandet sind,
dass der Steuerkontakt (23) der zweiten Kontaktschiene (15) mit einem definierten zweiten Längsabstand (D) von einer vorderen Stirnwand (77) der zweiten Kontaktschiene (15) beabstandet ist,
dass der erste Leistungskontakt (21) der in Fahrzeug-Längsrichtung (x) ausgerichteten ersten Kontaktschiene (17), in Fahrzeug-Längsrichtung (x) gesehen, vor dem zweiten Leistungskontakt (25) angeordnet ist,
dass die Leistungskontakte (21, 25) der ersten Kontaktschiene (17) mit dem definierten ersten Längsabstand (J) voneinander beabstandet sind,
dass der erste Leistungskontakt (21) mit einem definierten dritten Längsabstand (I) von einer vorderen Stirnwand (79) der ersten Kontaktschiene (17) beabstandet ist,
dass der zweite Leistungskontakt (25) mit dem definierten dritten Längsabstand (I) von einer hinteren Stirnwand (81) der ersten Kontaktschiene (17) beabstandet ist,
dass der ladestationsseitige Steuer-Gegenkontakt (51) und ein erster ladestationsseitiger Leistungs-Gegenkontakt (53) durch wenigstens eine, insbesondere durch zwei, in Querrichtung (y) der Ladestation (5) ausgerichtete vordere Gegenkontaktschiene (43, 45) gebildet sind, und
dass ein zweiter ladestationsseitiger Leistungs-Gegenkontakt (49) und der ladestationsseitige Potentialausgleichs-Gegenkontakt (55) durch wenigstens eine, insbesondere durch zwei, in Querrichtung (y) der Ladestation (5) ausgerichtete hintere Gegenkontaktschiene (41, 47) gebildet ist, wobei die vordere und die hintere Gegenkontaktschiene (41, 43, 45, 47), in Längsrichtung (x) der Ladestation (5) gesehen, mit einem definierten Schienenabstand (H) voneinander beabstandet sind.

11. Vorrichtung nach Anspruch 10, **dadurch gekennzeichnet, dass** ausgehend von der Breite G der Gegenkontakte, eines Sicherheitsabstands S und des Schienenabstands H der vorderen und hinteren Gegenkontaktschiene als vorgegebene Parameter der erste Längsabstand J, der zweite Längsabstand D, der dritte Längsabstand I, die Länge E des Steuerkontakts, die Länge A der Leistungskontakte und die Länge F des Potentialausgleichskontakts gemäß den folgenden Formeln ausgebildet sind:
F=H-G; D=G+S; I=D/2; J=D+I; E=F-2xD; A=F-D; A=H-2xG-S

12. Fahrzeug, insbesondere Nutzfahrzeug, mit einer Vorrichtung nach einem der Ansprüche 1 bis 11.

13. Verfahren zum Aufladen eines elektrischen Energiespeichers eines einen elektrischen Antrieb aufweisenden Fahrzeugs zum Betreiben einer Vorrichtung nach einem der Ansprüche 1 bis 11, eines einen elektrischen Antrieb aufweisenden Fahrzeugs, mit einer dem Fahrzeug (1) zugeordneten elektrischen Kontakteinrichtung (8), die einen, einen ersten Pol bildenden ersten Leistungskontakt (21), einen, einen zweiten Pol bildenden zweiten Leistungskontakt (25), einen Steuerkontakt (23) und einen Potentialausgleichskontakt (27) aufweist, und mit einer, einer Ladestation (5) zugeordneten Gegenkontakteinrichtung (40), die zu den fahrzeugseitigen Kontakten (21, 23, 25, 27) korrespondierende Gegenkontakte (49, 51, 53, 55) aufweist,
wobei die fahrzeugseitigen Kontakte (21, 23, 25, 27) durch zwei Kontaktschienen (15, 17) gebildet sind,
wobei die zwei Kontakte (21, 23, 25, 27) der jeweiligen Kontaktschiene (15, 17), in Schienen-Längsrichtung gesehen, mit einem definierten Längs-Abstand voneinander beabstandet sind,
wobei jeder Kontaktschiene (15, 17) zwei Kontakte (21, 23, 25, 27) zugeordnet sind, wobei der Steuerkontakt (23) eine geringere Länge aufweist als die Leistungskontakte (21, 25),
wobei die Leistungskontakte (21, 25) eine geringere Länge aufweisen als der Potentialausgleichskontakt (27), und
wobei der erste Leistungskontakt (21), der zweite Leistungskontakt (25), der Steuerkontakt (23) und der Potentialausgleichskontakt (27) der fahrzeugseitigen Kontakteinrichtung (8) derart angeordnet und ausgebildet sind,
dass ausgehend von einem Kontaktzustand, in dem jeder fahrzeugseitige Kontakt (21, 23, 25, 27) in Anlage mit dem zugeordneten ladestationsseitigen Gegenkontakt (49, 51, 53, 55) ist, bei einer Bewegung des Fahrzeugs (1) vorwärts und/oder rückwärts zunächst der fahrzeugseitige Steuerkontakt (23) außer Anlage mit dem zugeordneten ladestationsseitigen Steuer-Gegenkontakt (51) kommt, anschließend die fahrzeugseitigen Leistungskontakte (21, 25) außer Anlage mit den zugeordneten ladestationsseitigen Leistungs-Gegenkontakten (49, 53) kommen und schließlich der fahrzeugseitige Potentialausgleichskontakt (27) außer Anlage mit dem zugeordneten ladestationsseitigen Potentialausgleichs-Gegenkontakt (55) kommt.

## Claims

1. Device for charging an electrical energy store of a vehicle having an electrical drive, comprising an electrical contact apparatus (8) that is assigned to the vehicle (1) and has a first power contact (21) forming a first pole, a second power contact (25) forming a second pole, a control contact (23) and a potential equalization contact (27), and comprising a mating contact apparatus (40) that is assigned to a charging station (5) and has mating contacts (49, 51, 53, 55) corresponding to the vehicle-side contacts (21, 23, 25, 27),
wherein the vehicle-side contacts (21, 23, 25, 27) are formed by two contact rails (15, 17), wherein two contacts (21, 23, 25, 27) are assigned to each contact rail (15, 17),
wherein the two contacts (21, 23, 25, 27) of the respective contact rail (15, 17) are spaced apart from one another by a defined longitudinal distance, as seen in the rail longitudinal direction,
wherein the control contact (23) has a shorter length than the power contacts (21, 25), wherein the power contacts (21, 25) have a shorter length than the potential equalization contact (27), and
wherein the first power contact (21), the second power contact (25), the control contact (23) and the potential equalization contact (27) of the vehicle-side contact apparatus (8) are arranged and formed in such a way
that, when the vehicle (1) moves forwards and/or backwards, starting from a contact state in which each vehicle-side contact (21, 23, 25, 27) is in contact with an assigned charging station-side mating contact (49, 51, 53, 55), first, the vehicle-side control contact (23) comes out of contact with an assigned charging station-side mating control contact (51), subsequently, the vehicle-side power contacts (21, 25) come out of contact with assigned charging station-side mating power contacts (49, 53) and, finally, the vehicle-side potential equalization contact (27) comes out of contact with an assigned charging station-side mating potential equalization contact (55).

2. Device according to Claim 1, **characterized in that** the two contacts (21, 23, 25, 27) of the respective contact rail (15, 17) are electrically insulated from one another by means of an electrical insulation material.

3. Device according to Claim 1 or 2, **characterized in that** the two power contacts (21, 25) have identical lengths.

4. Device according to one of the preceding claims, **characterized in that** the first power contact (21) and the control contact (23) are assigned to a first contact rail (15), and **in that** the second power contact (25) and the potential equalization contact (27) are assigned to a second contact rail (17).

5. Device according to Claim 4, **characterized in that** the first power contact (21) of the first contact rail (15) aligned in the vehicle longitudinal direction (x) is arranged upstream of the control contact (23), as seen in the vehicle longitudinal direction (x),
**in that** the two contacts (21, 23) of the first contact rail (15) are spaced apart from one another by a defined first longitudinal distance (C), as seen in the vehicle longitudinal direction (x),
**in that** the control contact (23) of the first contact rail (15) is spaced apart from a rear end wall (33) of the first contact rail (15) by a defined second longitudinal distance,
**in that** the power contact (25) of the second contact rail (17) aligned in the vehicle longitudinal direction (x) is arranged upstream of the potential equalization contact (27),
**in that** the two contacts (25, 27) of the second contact rail (17) are spaced apart from one another by the defined second longitudinal distance (D),
**in that** the charging station-side mating power contacts (49, 53) are formed by at least one, in particular by two, front mating contact rails (41, 45) aligned in the transverse direction (y) of the charging station (5), and
**in that** the charging station-side mating control contact (51) and the charging station-side mating potential equalization contact (55) are formed by at least one, in particular by two, rear mating contact rails (43, 47) aligned in the transverse direction (y) of the charging station (5), wherein the front and the rear mating contact rails (41, 43, 45, 47) are spaced apart from one another by a defined rail distance (H), as seen in the longitudinal direction (x) of the charging station (5).

6. Device according to Claim 5, **characterized in that**, on the basis of the width G of the mating contacts, of a safety distance S and of the rail distance H between the front and rear mating contact rails as predefined parameters, the first longitudinal distance C, the second longitudinal distance D, the length E of the control contact, the length A of the power contacts and the length F of the potential equalization contact are formed according to the following formulae:
F=H-G; D=G+S; C=2xD; E=F-2xD; A=F-D; A=H-2xG-S

7. Device according to Claim 6, **characterized in that** the first power contact (21) of the first contact rail (15) aligned in the vehicle longitudinal direction (x) is arranged downstream of the control contact (23), as seen in the vehicle longitudinal direction (x),
**in that** the two contacts (21, 23) of the first contact rail (15) are spaced apart from one another by a defined first longitudinal distance (C), as seen in the vehicle longitudinal direction (x),
**in that** the control contact (23) of the first contact rail (15) is spaced apart from a front end wall (77) of the first contact rail (15) by a defined second longitudinal distance (D),
**in that** the first power contact (21) is spaced apart from a rear end wall (33) of the first contact rail (15) by a defined third longitudinal distance (I),
**in that** the second power contact (25) of the second contact rail (17) aligned in the vehicle longitudinal direction (x) is arranged upstream of the potential equalization contact (27),
**in that** the two contacts (25, 27) of the second contact rail (17) are spaced apart from one another by the defined second longitudinal distance (D),
**in that** the second power contact (25) is spaced apart from a front end wall (79) of the second contact rail (17) by the defined third longitudinal distance (I),
**in that** the charging station-side mating potential equalization contact (55) and a first charging station-side mating power contact (49) are formed by at least one, in particular by two, rear mating contact rails (41, 47) aligned in the transverse direction (y) of the charging station (5), and
**in that** the charging station-side mating control contact (51) and a second charging station-side mating power contact (53) are formed by at least one, in particular by two, rear mating contact rails (43, 45) aligned in the transverse direction (y) of the charging station (5), wherein the front and the rear mating contact rails (41, 43, 45, 47) are spaced apart from one another by a defined rail distance (H), as seen in the longitudinal direction (x) of the charging station (5).

8. Device according to Claim 7, **characterized in that**, on the basis of the width G of the mating contacts, of a safety distance S and of the rail distance H between the front and rear mating contact rails as predefined parameters, the first longitudinal distance C, the second longitudinal distance D, the third longitudinal distance I, the length E of the control contact, the length A of the power contacts and the length F of the potential equalization contact are formed according to the following formulae:
F=H-G; D=G+S; I=D/2; C=2xD; E=F-2xD; A=F-D; A=H-2xG-S

9. Device according to one of Claims 1 to 3, **characterized in that** the first and second power contacts (21, 25) are assigned to a first contact rail (17), and **in that** the control contact (23) and the potential equalization contact (27) are assigned to a second contact rail (15).

10. Device according to Claim 9, **characterized in that** the potential equalization contact (27) of the second contact rail (15) aligned in the vehicle longitudinal direction (x) is arranged downstream of the control contact (23), as seen in the vehicle longitudinal direction (x),
**in that** the two contacts (23, 27) of the second contact rail (15) are spaced apart from one another by a defined first longitudinal distance (J), as seen in the vehicle longitudinal direction (x),
**in that** the control contact (23) of the second contact rail (15) is spaced apart from a front end wall (77) of the second contact rail (15) by a defined second longitudinal distance (D),
**in that** the first power contact (21) of the first contact rail (17) aligned in the vehicle longitudinal direction (x) is arranged upstream of the second power contact (25), as seen in the vehicle longitudinal direction (x),
**in that** the power contacts (21, 25) of the first contact rail (17) are spaced apart from one another by the defined first longitudinal distance (J),
**in that** the first power contact (21) is spaced apart from a front end wall (79) of the first contact rail (17) by a defined third longitudinal distance (I),
**in that** the second power contact (25) is spaced apart from a rear end wall (81) of the first contact rail (17) by the defined third longitudinal distance (I),
**in that** the charging station-side mating control contact (51) and a first charging station-side mating power contact (53) are formed by at least one, in particular by two, front mating contact rails (43, 45) aligned in the transverse direction (y) of the charging station (5), and
**in that** a second charging station-side mating power contact (49) and the charging station-side mating potential equalization contact (55) are formed by at least one, in particular by two, rear mating contact rails (41, 47) aligned in the transverse direction (y) of the charging station (5), wherein the front and the rear mating contact rails (41, 43, 45, 47) are spaced apart from one another by a defined rail distance (H), as seen in the longitudinal direction (x) of the charging station (5).

11. Device according to Claim 10, **characterized in that**, on the basis of the width G of the mating contacts, of a safety distance S and of the rail distance H between the front and rear mating contact rails as predefined parameters, the first longitudinal distance J, the second longitudinal distance D, the third longitudinal distance I, the length E of the control contact, the length A of the power contacts and the length F of the potential equalization contact are formed according to the following formulae:
F=H-G; D=G+S; I=D/2; J=D+I; E=F-2xD; A=F-D; A=H-2xG-S

12. Vehicle, in particular utility vehicle, comprising a device according to one of Claims 1 to 11.

13. Method for charging an electrical energy store of a vehicle having an electrical drive, for operating a device, according to one of Claims 1 to 11, of a vehicle having an electrical drive, comprising an electrical contact apparatus (8) that is assigned to the vehicle (1) and has a first power contact (21) forming a first pole, a second power contact (25) forming a second pole, a control contact (23) and a potential equalization contact (27), and comprising a mating contact apparatus (40) that is assigned to a charging station (5) and has mating contacts (49, 51, 53, 55) corresponding to the vehicle-side contacts (21, 23, 25, 27), wherein the vehicle-side contacts (21, 23, 25, 27) are formed by two contact rails (15, 17), wherein the two contacts (21, 23, 25, 27) of the respective contact rail (15, 17) are spaced apart from one another by a defined longitudinal distance, as seen in the rail longitudinal direction,
wherein two contacts (21, 23, 25, 27) are assigned to each contact rail (15, 17), wherein the control contact (23) has a shorter length than the power contacts (21, 25),
wherein the power contacts (21, 25) have a shorter length than the potential equalization contact (27), and
wherein the first power contact (21), the second power contact (25), the control contact (23) and the potential equalization contact (27) of the vehicle-side contact apparatus (8) are arranged and formed in such a way
that, when the vehicle (1) moves forwards and/or backwards, starting from a contact state in which each vehicle-side contact (21, 23, 25, 27) is in contact with the assigned charging station-side mating contact (49, 51, 53, 55), first, the vehicle-side control contact (23) comes out of contact with the assigned charging station-side mating control contact (51), subsequently, the vehicle-side power contacts (21, 25) come out of contact with the assigned charging station-side mating power contacts (49, 53) and, finally, the vehicle-side potential equalization contact (27) comes out of contact with the assigned charging station-side mating potential equalization contact (55).

## Revendications

1. Dispositif de chargement d'un accumulateur d'énergie électrique d'un véhicule présentant un entraînement électrique, comprenant un équipement de contact électrique (8) associé au véhicule (1) et qui présente un premier contact de puissance (21) formant un premier pôle, un deuxième contact de puissance (25) formant un deuxième pôle, un contact de commande (23) et un contact d'équipotentialité (27), et un équipement de contact complémentaire (40) associé à une station de chargement (5) et qui présente des contacts complémentaires (49, 51, 53, 55) correspondant aux contacts côté véhicule (21, 23, 25, 27),
les contacts côté véhicule (21, 23, 25, 27) étant formés par deux rails de contact (15, 17), chaque rail de contact (15, 17) étant associé à deux contacts (21, 23, 25, 27),
les deux contacts (21, 23, 25, 27) du rail de contact (15, 17) respectif, vus dans la direction longitudinale du rail, étant espacés l'un de l'autre par une distance longitudinale définie,
le contact de commande (23) présentant une longueur inférieure à celle des contacts de puissance (21, 25),
les contacts de puissance (21, 25) présentant une longueur inférieure à celle du contact d'équipotentialité (27), et
le premier contact de puissance (21), le deuxième contact de puissance (25), le contact de commande (23) et le contact d'équipotentialité (27) de l'équipement de contact côté véhicule (8) étant disposés et réalisés de telle sorte
qu'en partant d'un état de contact dans lequel chaque contact côté véhicule (21, 23, 25, 27) est en appui sur un contact complémentaire côté station de chargement associé (49, 51, 53, 55), lors d'un mouvement avant et/ou arrière du véhicule (1), d'abord le contact de commande côté véhicule (23) quitte le contact de commande complémentaire côté station de chargement associé (51), ensuite les contacts de puissance côté véhicule (21, 25) quittent les contacts de puissance complémentaires côté station de chargement associés (49, 53), et enfin le contact d'équipotentialité côté véhicule (27) quitte un contact d'équipotentialité complémentaire côté station de chargement associé (55).

2. Dispositif selon la revendication 1, **caractérisé en ce que** les deux contacts (21, 23, 25, 27) du rail de contact (15, 17) respectif sont isolés électriquement l'un de l'autre au moyen d'un matériau d'isolation électrique.

3. Dispositif selon la revendication 1 ou 2, **caractérisé en ce que** les deux contacts de puissance (21, 25) présentent une longueur identique.

4. Dispositif selon l'une quelconque des revendications précédentes, **caractérisé en ce qu'**un premier rail de contact (15) est associé au premier contact de puissance (21) et au contact de commande (23), et **en ce qu'**un deuxième rail de contact (17) est associé au deuxième contact de puissance (25) et au contact d'équipotentialité (27).

5. Dispositif selon la revendication 4, **caractérisé en ce que** le premier contact de puissance (21) du premier rail de contact (15) orienté dans la direction longitudinale de véhicule (x), est disposé devant le contact de commande (23), vu dans la direction longitudinale de véhicule (x),
**en ce que** les deux contacts (21, 23) du premier rail de contact (15), vus dans la direction longitudinale de véhicule (x), sont espacés l'un de l'autre par une première distance longitudinale définie (C),
**en ce que** le contact de commande (23) du premier rail de contact (15) est espacé d'une paroi frontale arrière (33) du premier rail de contact (15) par une deuxième distance longitudinale définie,
**en ce que** le contact de puissance (25) du deuxième rail de contact (17), orienté dans la direction longitudinale de véhicule (x), est disposé devant le contact d'équipotentialité (27),
**en ce que** les deux contacts (25, 27) du deuxième rail de contact (17) sont espacés l'un de l'autre par la deuxième distance longitudinale définie (D),
**en ce que** les contacts de puissance complémentaires côté station de chargement (49, 53) sont formés par au moins un, en particulier par deux rails de contact complémentaires avant (41, 45) orientés dans la direction transversale (y) de la station de chargement (5), et
**en ce que** le contact de commande complémentaire côté station de chargement (51) et le contact d'équipotentialité complémentaire côté station de chargement (55) sont formés par au moins un, en particulier par deux rails de contact complémentaires arrière (43, 47) orientés dans la direction transversale (y) de la station de chargement (5), les rails de contact complémentaires avant et arrière (41, 43, 45, 47), vus dans la direction longitudinale (x) de la station de chargement (5), étant espacés les uns des autres par une distance de rail définie (H).

6. Dispositif selon la revendication 5, **caractérisé en ce qu'**en partant de la largeur G des contacts complémentaires, d'une distance de sécurité S et de la distance de rail H des rails de contact complémentaires avant et arrière comme paramètres spécifiés, la première distance longitudinale C, la deuxième distance longitudinale D, la longueur E du contact de commande, la longueur A des contacts de puissance et la longueur F du contact d'équipotentialité sont réalisées selon les formules suivantes :
F=H-G ; D=G+S ; C=2xD ; E=F-2xD ; A=F-D ; A=H-2xG-S

7. Dispositif selon la revendication 6, **caractérisé en ce que** le premier contact de puissance (21) du premier rail de contact (15) orienté dans la direction longitudinale de véhicule (x) est disposé derrière le contact de commande (23), vu dans la direction longitudinale de véhicule (x),
**en ce que** les deux contacts (21, 23) du premier rail de contact (15), vus dans la direction longitudinale de véhicule (x), sont espacés l'un de l'autre par une première distance longitudinale définie (C),
**en ce que** le contact de commande (23) du premier rail de contact (15) est espacé d'une paroi frontale avant (77) du premier rail de contact (15) par une deuxième distance longitudinale définie (D),
**en ce que** le premier contact de puissance (21) est espacé d'une paroi frontale arrière (33) du premier rail de contact (15) par une troisième distance longitudinale définie (I),
**en ce que** le deuxième contact de puissance (25) du deuxième rail de contact (17), orienté dans la direction longitudinale de véhicule (x), est disposé devant le contact d'équipotentialité (27),
**en ce que** les deux contacts (25, 27) du deuxième rail de contact (17) sont espacés l'un de l'autre par la deuxième distance longitudinale définie (D),
**en ce que** le deuxième contact de puissance (25) est espacé d'une paroi frontale avant (79) du deuxième rail de contact (17) par la troisième distance longitudinale définie (I),
**en ce que** le contact d'équipotentialité complémentaire côté station de chargement (55), et un premier contact de puissance complémentaire côté station de chargement (49) sont formés par au moins un, en particulier deux rails de contact complémentaires arrière (41, 47) orientés dans la direction transversale (y) de la station de chargement (5), et
**en ce que** le contact de commande complémentaire côté station de chargement (51) et un deuxième contact de puissance complémentaire côté station de chargement (53) sont formés par au moins un, en particulier par deux rails de contact complémentaires arrière (43, 45) orientés dans la direction transversale (y) de la station de chargement (5), les rails de contact complémentaires avant et arrière (41, 43, 45, 47), vus dans la direction longitudinale (x) de la station de chargement (5), étant espacés l'un de l'autre par une distance de rail définie (H).

8. Dispositif selon la revendication 7, **caractérisé en ce qu'**en partant de la largeur G des contacts complémentaires, d'une distance de sécurité S et de la distance de rail H des rails de contact complémentaires avant et arrière comme paramètres spécifiés, la première distance longitudinale C, la deuxième distance longitudinale D, la troisième distance longitudinale I, la longueur E du contact de commande, la longueur A des contacts de puissance et la longueur F du contact d'équipotentialité sont réalisées selon les formules suivantes :
F=H-G ; D=G+S ; I=D/2 ; C=2xD ; E=F-2xD ; A=F-D ; A=H-2xG-S

9. Dispositif selon l'une quelconque des revendications 1 à 3, **caractérisé en ce qu'**un premier rail de contact (17) est associé au premier et au deuxième contact de puissance (21, 25), et **en ce qu'**un deuxième rail de contact (15) est associé au contact de commande (23) et au contact d'équipotentialité (27).

10. Dispositif selon la revendication 9, **caractérisé en ce que** le contact d'équipotentialité (27) du deuxième rail de contact (15), orienté dans la direction longitudinale de véhicule (x), est disposé derrière le contact de commande (23), vu dans la direction longitudinale de véhicule (x),
**en ce que** les deux contacts (23, 27) du deuxième rail de contact (15), vus dans la direction longitudinale de véhicule (x), sont espacés l'un de l'autre par une première distance longitudinale définie (J),
**en ce que** le contact de commande (23) du deuxième rail de contact (15) est espacé d'une première paroi frontale (77) du deuxième rail de contact (15) par une deuxième distance longitudinale définie (D),
**en ce que** le premier contact de puissance (21) du premier rail de contact (17), orienté dans la direction longitudinale de véhicule (x), est disposé devant le deuxième contact de puissance (25), vu dans la direction longitudinale de véhicule (x),
**en ce que** les contacts de puissance (21, 25) du premier rail de contact (17) sont espacés l'un de l'autre par une première distance longitudinale définie (J),
**en ce que** le premier contact de puissance (21) est espacé d'une paroi frontale avant (79) du premier rail de contact (17) par une troisième distance longitudinale définie (I),
**en ce que** le deuxième contact de puissance (25) est espacé d'une première paroi frontale arrière (81) du premier rail de contact (17) par la troisième distance longitudinale définie (I),
**en ce que** le contact de commande complémentaire côté station de chargement (51) et un premier contact de puissance complémentaire côté station de chargement (53) sont formés par au moins un, en particulier par deux rails de contact complémentaires avant (43, 45) orientés dans la direction transversale (y) de la station de chargement (5), et
**en ce qu'**un deuxième contact de puissance complémentaire côté station de chargement (49) et le contact d'équipotentialité complémentaire côté station de chargement (55) sont formés par au moins un, en particulier par deux rails de contact complémentaires arrière (41, 47), orientés dans la direction transversale (y) de la station de chargement (5), les rails de contact complémentaires avant et arrière (41, 43, 45, 47), vus dans la direction longitudinale (x) de la station de chargement (5), étant espacés l'un de l'autre par une distance de rail définie (H).

11. Dispositif selon la revendication 10, **caractérisé en ce qu'**en partant de la largeur G des contacts complémentaires, d'une distance de sécurité S et de la distance de rail H des rails de contact complémentaires avant et arrière comme paramètres spécifiés, la première distance longitudinale J, la deuxième distance longitudinale D, la troisième distance longitudinale I, la longueur E du contact de commande, la longueur A des contacts de puissance et la longueur F du contact d'équipotentialité sont réalisées selon les formules suivantes :
F=H-G ; D=G+S ; I=D/2 ; J=D+I ; E=F-2xD ; A=F-D ; A=H-2xG-S

12. Véhicule, en particulier véhicule utilitaire, comprenant un dispositif selon l'une quelconque des revendications 1 à 11.

13. Procédé de chargement d'un accumulateur d'énergie électrique d'un véhicule présentant un entraînement électrique pour exploiter un dispositif selon l'une quelconque des revendications 1 à 11 d'un véhicule présentant un entraînement électrique, comprenant un équipement de contact électrique (8) associé au véhicule (1) et qui présente un premier contact de puissance (21) formant un premier pôle, un deuxième contact de puissance (25) formant un deuxième pôle, un contact de commande (23) et un contact d'équipotentialité (27), et un équipement de contact complémentaire (40) associé à une station de chargement (5) et qui présente des contacts complémentaires (49, 51, 53, 55) correspondant aux contacts côté véhicule (21, 23, 25, 27),
les contacts côté véhicule (21, 23, 25, 27) étant formés par deux rails de contact (15, 17),
les deux contacts (21, 23, 25, 27) du rail de contact (15, 17) respectif, vus dans la direction longitudinale du rail, étant espacés l'un de l'autre par une distance longitudinale définie,
chaque rail de contact (15, 17) étant associé à deux contacts (21, 23, 25, 27), le contact de commande (23) présentant une longueur inférieure à celle des contacts de puissance (21, 25),
les contacts de puissance (21, 25) présentant une longueur inférieure à celle du contact d'équipotentialité (27), et
le premier contact de puissance (21), le deuxième contact de puissance (25), le contact de commande (23) et le contact d'équipotentialité (27) de l'équipement de contact côté véhicule (8) étant disposés et réalisés de telle sorte
qu'en partant d'un état de contact dans lequel chaque contact côté véhicule (21, 23, 25, 27) est en appui sur le contact complémentaire côté station de chargement associé (49, 51, 53, 55), lors d'un mouvement avant et/ou arrière du véhicule (1), d'abord le contact de commande côté véhicule (23) quitte le contact de commande complémentaire côté station de chargement associé (51), ensuite les contacts de puissance côté véhicule (21, 25) quittent les contacts de puissance complémentaires côté station de chargement associés (49, 53), et enfin le contact d'équipotentialité côté véhicule (27) quitte un contact d'équipotentialité complémentaire côté station de chargement associé (55).
